(19) Europäisches Patentamt
European Patent Office
Office européen des brevets

(11) **EP 4 135 423 A1**

(12) **EUROPEAN PATENT APPLICATION**
published in accordance with Art. 153(4) EPC

(43) Date of publication:
**15.02.2023 Bulletin 2023/07**

(21) Application number: **20930181.1**

(22) Date of filing: **10.04.2020**

(51) International Patent Classification (IPC):
***H04W 52/30*** (2009.01)

(52) Cooperative Patent Classification (CPC):
**H04W 52/30**

(86) International application number:
**PCT/JP2020/016210**

(87) International publication number:
**WO 2021/205668 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-ku**
**Tokyo 100-6150 (JP)**

(72) Inventors:
• **MATSUMURA, Yuki**
**Tokyo 100-6150 (JP)**

• **NAGATA, Satoshi**
**Tokyo 100-6150 (JP)**
• **WANG, Jing**
**Beijing 100190 (CN)**
• **SUN, Weiqi**
**Beijing 100190 (CN)**
• **HOU, Xiaolin**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, RADIO COMMUNICATION METHOD, AND BASE STATION**

(57) A terminal according to one aspect of the present disclosure includes: a transmitting section that transmits a report of Power-management Maximum Power Reduction (P-MPR) of each Frequency Range (FR), cell or Bandwidth Part (BWP) by a Medium Access Control-Control Element (MAC CE); and a control section that controls transmission of an Uplink (UL) signal based on the P-MPR. According to one aspect of the present disclosure, it is possible to appropriately report P-MPR.

FIG. 2A

| R | R | R | PMPR (5-bit, can be also other bit number) |
|---|---|---|---|

← 8 BITS →

EP 4 135 423 A1

FIG. 2B

| R | PMPR (2-bit) | Serving Cell ID |
|---|---|---|

← 8 BITS →

FIG. 2C

| R | Serving Cell ID | | BWP ID |
|---|---|---|---|
| R | R | R | PMPR (5-bit) |

← 8 BITS →

**Description**

Technical Field

The present disclosure relates to a terminal, a radio communication method and a base station of a next-generation mobile communication system.

Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (Third Generation Partnership Project (3GPP) Releases (Rel.) 8 and 9), LTE-Advanced (3GPP Rel. 10 to 14) has been specified.

LTE successor systems (also referred to as, for example, the 5th generation mobile communication system (5G), 5G+ (plus), the 6th generation mobile communication system (6G), New Radio (NR) or 3GPP Rel. 15 or subsequent releases) are also studied.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

Summary of Invention

Technical Problem

Handling of a Maximum Permitted Exposure (MPE) issue is studied for NR. It is demanded that a LTE satisfies regulations of the Federal Communication Commission (FCC) on maximum radiation of a human body for health and safety.

Although it is studied to report Power-management Maximum Power Reduction (P-MPR) by an MAC CE to deal with the MPE issue, a detailed design is not determined. Unless the P-MPR is appropriately reported, there is a risk that system performance such as a throughput lowers.

It is therefore one of objects of the present disclosure to provide a terminal, a radio communication method and a base station that can appropriately report P-MPR.

Advantageous Effects of Invention

A terminal according to one aspect of the present disclosure includes: a transmitting section that transmits a report of Power-management Maximum Power Reduction (P-MPR) of each Frequency Range (FR), cell or Bandwidth Part (BWP) by a Medium Access Control-Control Element (MAC CE); and a control section that controls transmission of an Uplink (UL) signal based on the P-MPR.

Advantageous Effects of Invention

According to one aspect of the present disclosure, it is possible to provide a terminal, a radio communication method and a base station that can appropriately report P-MPR.

Brief Description of Drawings

Fig. 1 is a diagram illustrating one example of a P-MPR value.
Figs. 2A to 2C are diagrams illustrating a configuration example of an MAC CE according to aspect 1-1.
Fig. 3 is a diagram illustrating a configuration example of an MAC CE according to aspect 1-2.
Fig. 4 is a diagram illustrating a configuration example of an MAC CE according to aspect 1-3.
Fig. 5 is a diagram illustrating a configuration example of an MAC CE according to aspect 1-4.

Fig. 6 is a diagram illustrating a first configuration example of an MAC CE according to aspect 2-1.

Fig. 7 is a diagram illustrating a second configuration example of the MAC CE according to aspect 2-1.

Fig. 8 is a diagram illustrating a third configuration example of the MAC CE according to aspect 2-1.

Fig. 9 is a diagram illustrating a fourth configuration example of the MAC CE according to aspect 2-1.

Fig. 10 is a diagram illustrating a first configuration example of an MAC CE according to aspect 2-2.

Fig. 11 is a diagram illustrating a second configuration example of the MAC CE according to aspect 2-2.

Fig. 12 is a diagram illustrating a third configuration example of the MAC CE according to aspect 2-2.

Fig. 13 is a diagram illustrating a fourth configuration example of the MAC CE according to aspect 2-2.

Fig. 14 is a diagram illustrating a first example of an MAC CE including information that indicates whether an MPE issue is present or absent.

Fig. 15 is a diagram illustrating a configuration example of an MAC CE including a field that indicates whether or not an MPE safe beam is present.

Fig. 16 is a diagram illustrating one example of a schematic configuration of a radio communication system according to one embodiment.

Fig. 17 is a diagram illustrating one example of a configuration of a base station according to the one embodiment.

Fig. 18 is a diagram illustrating one example of a configuration of a user terminal according to the one embodiment.

Fig. 19 is a diagram illustrating one example of hardware configurations of the base station and the user terminal according to the one embodiment.

Description of Embodiments

Handling of a Maximum Permitted Exposure (MPE) (or electromagnetic power density exposure) issue is studied for NR. It is demanded that a UE satisfies regulations of the Federal Communication Commission (FCC) on maximum radiation of a human body for health and safety. For example, Rel. 15 NR specifies following two restriction methods as regulations for restricting exposure.

<Restriction Method 1>

A restriction that uses Power-management Maximum Power Reduction (P-MPR or maximum permitted UE output power reduction) has been specified as the restriction method 1. For example, LTE maximum output power $P_{CMAX, f, c}$ is configured such that corresponding $P_{UMAX, f, c}$ (maximum output power to be measured or configured maximum UE output power to be measured) satisfies following equation (1).

$$P_{Powerclass} - MAX(MAX(MPR_{f, c}, A\text{-}MPR_{f, c}) + \Delta MB_{P, n}, P\text{-}MPR_{f, c}) - MAX\{T(MAX(MPR_{f, c}, A\text{-}MPR_{f, c},)), T(P\text{-}MPR_{f, c})\} \leq P_{UMAX, f, c} \leq EIRP_{max} \quad (1)$$

$EIRP_{max}$ is a maximum value of corresponding measurement peak Equivalent Isotopically Radiated Power (EIRP). $P\text{-}MPR_{f, c}$ is a value that indicates reduction of maximum output power that is permitted for a carrier f of a serving cell c. $P\text{-}MPR_{f, c}$ is introduced in an equation of the configured UE maximum output power $P_{CMAX, f, c}$ of the carrier f of the serving cell c. Consequently, the LTE can report available maximum output transmission power to a base station (e.g., gNB). This report can be used by the base station to determine scheduling. $P\text{-}MPR_{f, c}$ may be used to guarantee an observance of an available electromagnetic energy absorption requirement, and deal with an unnecessary radiation/self-defense requirement in a case of simultaneous transmission on a plurality of RATs in a scenario that is beyond a range of use of 3GPP RAN, or may be used to guarantee an observance of an available electromagnetic energy absorption requirement in a case where proximity detection is used to deal with a requirement that lower maximum output power is necessary.

<Restriction Method 2>

UE capability information that gives a notification of an uplink transmission rate at which the LTE can perform transmission without having to apply P-MPR is introduced to Rel. 15 NR to meet guidelines for protecting human bodies from millimeter waves. The capability information may be referred to as a maximum uplink duty cycle (maxUplinkDutyCycle-FR2) in a Frequency Range 2 (FR2).

maxUplinkDutyCycle-FR2 corresponds to a higher layer parameter. maxUplinkDutyCycle-FR2 may be an upper limit of a UL transmission rate in a fixed evaluation duration (e.g., 1 second). According to Rel. 15 NR, this value is one of n15, n20, n25, n30, n40, n50, n60, n70, n80, n90 and n100 that are associated with 15%, 20%, 25%, 30%, 40%, 50%, 60%, 70%, 80%, 90% and 100%, respectively. maxUplinkDutyCycle-FR2 may be applied to all LTE power classes of the FR 2. In addition, a default value may not be specified for maxUplinkDutyCycle-FR2.

In a case where a field of maxUplinkDutyCycle-FR2 is present as the UE capability information, and a rate of a LTL symbol to be transmitted in the evaluation duration of 1 second is larger than maxUplinkDutyCycle-FR2, the LTE may apply a restriction (restriction method 1) that uses P-MPR according to LTL scheduling. When this is not the case, the LTE may not apply P-MPR.

In a case where the field of maxUplinkDutyCycle-FR2 is not present as the UE capability information, compliance with an electromagnetic power density exposure requirement (MPE requirement) may be guaranteed by reduction of a power density or other means.

It has been studied to encourage the UE that includes a plurality of panels to select a UL transmission beam based on a LTL beam instruction by taking UL coverage loss caused by MPE into account in order to select a UL panel at a high speed.

However, how to increase a speed of selection of a beam/panel that is based on MPE and how to notify an NW of this selection to avoid blind detection of the network matter. Unless a beam/panel is selected based on MPE at a high speed, there is a risk of degradation of system performance such as a decrease in a throughput. Furthermore, in a case where the UE autonomously changes a UL transmission beam and the network does not know the changed UL transmission beam, the network performs blind detection and then determines a UL reception beam, and there is a risk of degradation of system performance such as a decrease in a throughput.

Hence, it is thought that the LTE reports that an uplink transmission beam does not satisfy the Maximum Permitted Exposure (MPE) requirement.

When a report triggered by the LTE for the MPE issue is configured to the LTE (by, for example, an RRC layer signaling), and the UE detects the MPE issue of an instructed UL beam, the UE may report an occurrence of the MPE issue. In the present disclosure, the MPE issue, an MPE failure, that the MPE requirement is not satisfied and that it is not possible to pass the MPE requirement may be interchangeably read. In the present disclosure, MPE safe, MPE adaptation, that the MPE issue does not occur, that the MPE failure does not occur, that the MPE requirement is satisfied, and that it is possible to pass the MPE requirement may be interchangeably read.

In the present disclosure, a report of an occurrence of the MPE issue, a report of the MPE issue, a first report and a request for recovery (resolution) of the MPE issue may be interchangeably read.

When a UL transmission beam or an RS instructed for UL transmission (e.g., PUSCH) does not satisfy the MPE requirement (when a power parameter for an instructed LTL transmission beam does not satisfy the MPE requirement), the UE may detect (decide) the MPE issue. The instruction of the LTL transmission beam may be an SRS Resource Indictor (SRI) that instructs a Sounding Reference Signal (SRS) resource for a PUSCH, or may be spatial relation information, a Transmission Configuration Indicator (TCI) state or a Quasi Co-Location (QCL) assumption for at least one of a PUCCH, a PUSCH, an SRS and a PRACH.

The MPE requirement may be that at least one of followings is satisfied. ·P-MPR$_{f, c}$ that is required by taking MPE into account is larger than a P-MPR threshold. ·P$_{CMAX, f, c}$ (maximum output power configured to the UE for the carrier f of the serving cell c) that is calculated by taking MPE into account is smaller than a P$_{CMAX}$ threshold. -A PH value (e.g., an actual PH or a virtual PH) that is calculated by taking MPE into account is smaller than a PH threshold.

At least one of the P-MPR threshold, the P$_{CMAX}$ threshold and the PH threshold may be defined in advance or may be configured.

The UE may report an occurrence of the MPE issue in response to detection of the MPE issue.

The UE may determine a UL transmission beam/panel that satisfies the MPE requirement in response to detection of the occurrence of the MPE issue. In the present disclosure, a UL transmission beam/panel that satisfies the MPE requirement, an MPE adaptive beam/panel, an MPE safe beam/panel, a candidate beam/panel, and a new UL transmission beam/panel may be interchangeably read. In the present disclosure, an MPE adaptive beam/panel report, an MPE adaptive beam/panel list and a UL transmission beam/panel change plan may be interchangeably read.

The UE may report at least one determined MPE adaptive beam/panel.

<New MAC CE>

A new Medium Access Control-Control Element (MAC CE) that has a new Logical Channel ID (LCI) for reporting at least one of the occurrence of the MPE issue, and information related to a beam/panel (MPE adaptive beam/panel) that satisfies the MPE requirement for 1 or more cells and BWPs may be defined. The new MAC CE may indicate at least one of a new UL transmission beam/panel and a cell in which the MPE issue occurs.

The new MAC CE may include at least one of items of following contents 1 to 8.

[Contents 1]

A field of 0 or 1 bit that indicates the MPE issue per cell/BWP. The MAC CE may include a field for 1 or more cells/BWPs. The MAC CE may include a cell/BWP index.

[Contents 2]

1 or more or up to N MPE adaptive beam/panel indices for one cell/BWP in which the MPE issue is detected.

[Contents 3]

An MPE adaptive beam/panel index for a plurality of cells/BWPs in which the MPE issue is detected. The MAC CE may include 1 or more or up to N MPE adaptive beam/panel indices for each of a plurality of these cells/BWPs.

[Contents 4]

A P-MPR that is necessary for each beam/panel index in addition to at least one of the items of contents 1, 2 and 3.

[Contents 5]

Remaining power that is estimated by taking P-MPR into account for each beam/panel index (remaining power that is estimated by taking MPE into account) in addition at least one of items of contents 1, 2 and 3. The estimated remaining power may be a PH value based on actual transmission or a reference format (virtual transmission) by taking MPE into account, or may be a PHR by taking MPE into account per beam. The PHR may include contents (at least one of a PH type, a PH value and $P_{CMAX, f, c}$) in a PHR MAC CE.

[Contents 6]

$P_{CMAX, f, c}$ that is calculated for each beam/panel index in addition to at least one of the items of contents 1, 2 and 3.

[Contents 7]

2 or more combinations of the items of contents 1 to 6.

[Contents 8]

A field (bit) that indicates that an MPE adaptive beam/panel is not discovered for a cell/BWP based on the contents 7.

<P-MPR Report>

Following options A, B, and C are considered as (1) a P-MPR range [dB], (2) the number of bits and (3) a P-MPR value in a case where P-MPR is reported by the MAC CE. The options A, B and C may be switched by RRC/MAC CE/DCI. The P-MPR value is necessary to resolve a Radio Link Failure (RLF).

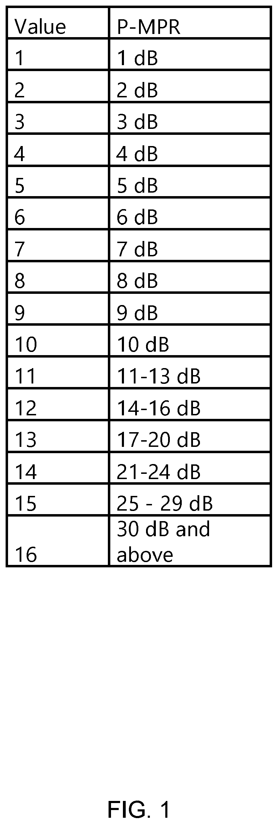

[Option A]
(1) A range of 1 dB to X dB (X = 20 or 31). (2) 5 bits (32 values at maximum). (3) A value per 1 dB within a range of 1 dB to X dB.
[Option B]
(1) A range of 1 dB to Y dB (Y > 10). (2) 2 bits (4 values). (3) The P-MPR value of 4 divisions (e.g., {1 to 3, 4 to 6 and 7 to 9 > 10} or {1 to 5, 6 to 8 and 9 to 11 ≥ 12}) is expressed by 2 bits.
[Option C]
(1) 1 dB to 30 dB. (2) 4 bits (16 values). (3) The P-MPR value is configured as illustrated in Fig. 1.

However, detailed design of a report of P-MPR by an MAC CE is not determined. Unless P-MPR is appropriately reported, there is a risk that system performance such as a throughput lowers.

Hence, the inventors of the present invention have conceived a method for appropriately reporting P-MPR by an MAC CE.

Embodiments according to the present disclosure will be described in detail below with reference to the drawings. A radio communication method according to each embodiment may be each applied alone, or may be applied in combination.

Each embodiment may be applied to at least one Frequency Range (FR). At least one FR may be an FR 2 or may be an FR 1 and the FR 2.

The present disclosure will be described assuming that a duty cycle or a maximum duty uplink duty cycle means a maximum uplink duty cycle (maxUplinkDutyCycle-FR2) in the FR 2, yet is not limited to this. The duty cycle may be read as a duty cycle in another FR (e.g., FR 4).

In the present disclosure, "A/B" and "at least one of A and B" may be interchangeably read. In the present disclosure, report, notification and indication may be interchangeably read. In the present disclosure, a block and an entry may be interchangeably read.

In the present disclosure, a beam, a panel, a UE panel and an antenna panel may be interchangeably read. Furthermore, a beam index, a panel index, a beam index and a panel index may be interchangeably read. The beam index may include the panel index, or the beam index and the panel index may be separately indicated.

The beam index may be an RS index, an SSB index, a CSI-RS or an SRS index. A panel index, an RS group (RS set) index, an antenna port (an antenna port group or an antenna port set) index and an antenna assumption (mode) index may be interchangeably read.

A report according to the present disclosure may be performed by a higher layer signaling. The higher layer signaling is, for example, a Radio Resource Control (RRC) signaling, broadcast information (Master Information Block (MIB)), a System Information Block (SIB) or a Medium Access Control (MAC) signaling.

In the present disclosure, the MPE requirement and that the FCC regulations for MPE are satisfied may be interchangeably read.

In the present disclosure, UL transmission, a PUSCH, a PUCCH and an SRS may be interchangeably read.

In the present disclosure, that A is larger than B and that A is equal to or more than B may be interchangeably read. In the present disclosure, that A is smaller than B and that A is equal to or less than B may be interchangeably read.

In the present disclosure, a cell and a CC may be interchangeably read.

In the present disclosure, a Power Headroom (PH) and a Power Headroom Report (PHR) may be interchangeably read. In the present disclosure, a real PH and a PH based on actual transmission may be interchangeably read. In the present disclosure, a virtual PH, a PH based on a reference format and a PH based on reference transmission may be interchangeably read.

In addition, in the present disclosure, the higher layer signaling may be one or a combination of, for example, a Radio Resource Control (RRC) signaling, a Medium Access Control (MAC) signaling and broadcast information.

For example, an MAC Control Element (MAC CE) or an MAC Protocol Data Unit (PDU) may be used for the MAC signaling. The broadcast information may be, for example, a Master Information Block (MIB), a System Information Block (SIB), Remaining Minimum System Information (RMSI) or Other System Information (OSI).

(Radio Communication Method)

<First Embodiment>

A UE may transmit a P-MPR report (P-MPR value) of each Frequency Range (FR)/cell/Bandwidth Part (BWP) by an MAC CE, and control transmission of a LTL signal based on the P-MPR (P-MPR report). This P-MPR report may be used in a case where beam/panel information is not taken into account (e.g., an operation of Rel. 16). In the present disclosure, a cell may be read as a cell group.

[Aspect 1-1]

The UE may transmit one P-MPR report (entry) together with a notification of one FR/cell/BWP by an MAC CE. The MAC CE may indicate an FR type according to whether or not the MAC CE includes the notification of the FR/cell/BWP. For example, that the MAC CE does not include the notification of the FR/cell/BWP may indicate application of a specific FR (FR 2/FR x (x is an arbitrary numerical value)). Alternatively, the MAC CE may include a notification of 1 or a plurality of FRs/cells/BWPs.

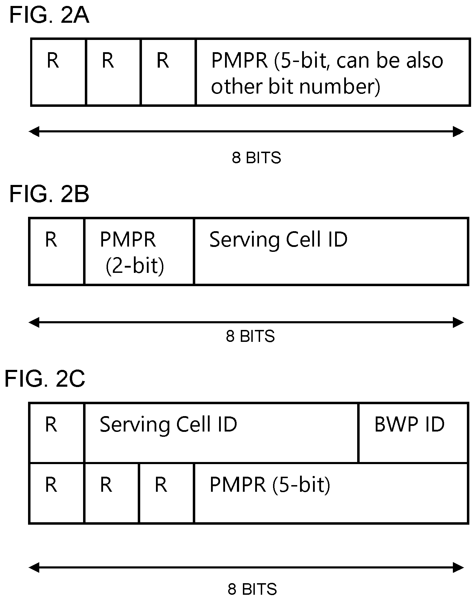

Figs. 2A to 2C are diagrams illustrating configuration examples of an MAC CE according to aspect 1-1. Fig. 2A illustrates an example of an MAC CE that does not include a notification of an FR/cell/BWP and includes one P-MPR report. When the MAC CE does not include the notification of the FR/cell/BWP as illustrated in Fig. 2A, this MAC CE may be applied to the specific FR. Fig. 2B illustrates an example of the MAC CE that includes the notification of a cell (serving cell ID) and one P-MPR report (PMPR). Fig. 2C illustrates an example of the MAC CE that includes the notification of a cell (serving cell ID), a notification of a BWP (BWP ID) and one P-MPR report.

In this regard, in each drawing, R means a reserved bit that does not give a notification of information. The PMPR may be read as P-MPR. Information is recorded in a unit of 8 bits (octet) in the MAC CE, and therefore an overhead increases in the unit of 8 bits. Therefore, it is preferable to make a multiple (the number of rows in the drawings) of 8 bits to be used smaller. The number of bits of the P-MPR is not limited to numbers illustrated in the drawings, and other numbers of bits may be applied.

[Aspect 1-2]

The LTE may transmit one P-MPR report per FR/cell/BWP together with a notification of a plurality of FRs/cells/BWPs by an MAC CE. The number of a plurality of these cells/BWPs may be variable.

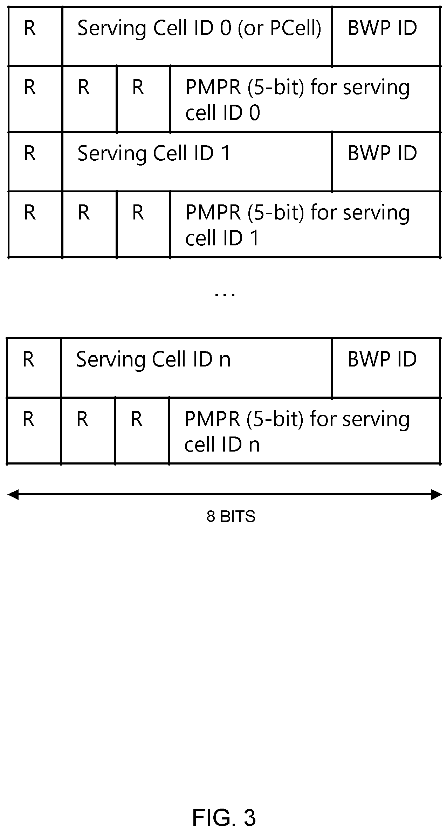

Fig. 3 is a diagram illustrating a configuration example of an MAC CE according to aspect 1-2. In Fig. 3, a notification of a cell (serving cell ID), a notification of a BWP (BWP ID) and one P-MPR report are included in one block (an entry and 8 bits × 2), and a plurality of these blocks (n blocks) are included in the MAC CE. n may be variable according to the number of cells.

[Aspect 1-3]

The UE may transmit a plurality of P-MPR reports (a plurality of P-MPR values) together with a notification of one FR/cell/BWP by an MAC CE. A plurality of these P-MPR reports may support respectively different calculation criteria.

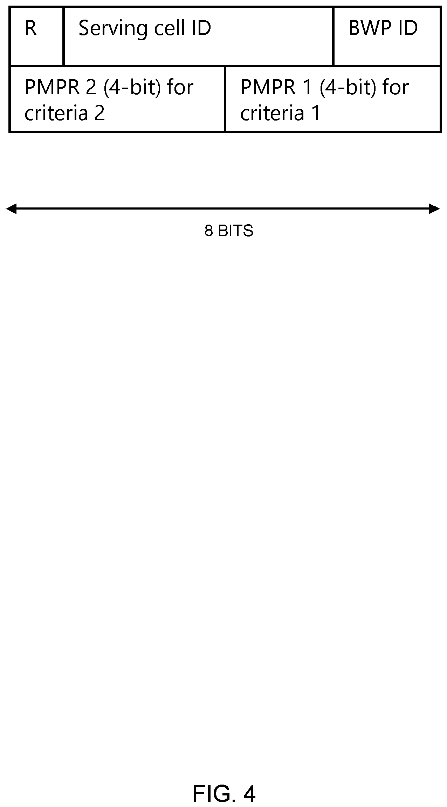

Fig. 4 is a diagram illustrating a configuration example of an MAC CE according to aspect 1-3. In Fig. 4, a notification of a cell (serving cell ID), a notification of a BWP (BWP ID) and two P-MPR reports are included in the MAC CE. The two P-MPR reports support respectively different calculation criteria (criteria 1 and 2).

[Aspect 1-4]

The UE may transmit a plurality of P-MPR reports per FR/cell/BWP together with a notification of a plurality of FRs/cells/BWPs by an MAC CE. A plurality of these P-MPR reports may support respectively different calculation criteria. The number of a plurality of these FRs/cells/BWPs may be variable.

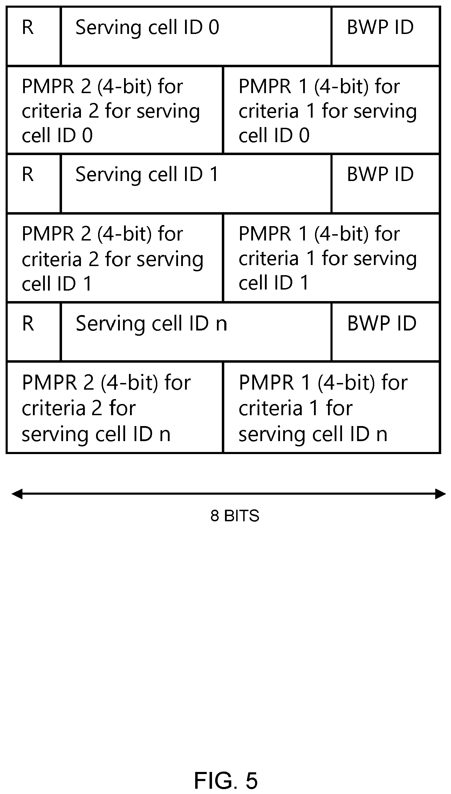

Fig. 5 is a diagram illustrating a configuration example of an MAC CE according to aspect 1-4. In Fig. 5, a notification of a cell (serving cell ID), a notification of a BWP (BWP ID) and two P-MPR reports are included in one block (8 bits × 2), and a plurality of these blocks (n blocks) are included in the MAC CE. n may be variable according to the number of cells.

According to the first embodiment, even when P-MPR is different per FR/cell/BWP, the LTE can transmit an appropriate P-MPR report.

<Second Embodiment>

A UE may transmit a P-MPR report of each beam/panel and each FR/cell/BWP by an MAC CE, and control transmission of a UL signal based on the P-MPR report. This P-MPR may be used in a case where beam/panel information is taken into account (e.g., an operation of Rel. 17). For example, an MAC CE to which a beam/panel index is added may be applied to the MAC CE according to each aspect of the first embodiment.

The beam/panel index may be an index of an SSB/CSI-RS resource set/CSI-RS resource/SRS resource set/SRS resource, or may be this index and a panel index. The beam/panel index may be a TCI state ID/PUCCH spatial relation ID, or may mean that QCL of an RS/channel includes an MPE issue or MPE safe.

The beam/panel index may be at least one of a panel ID, an ID related to a LTL RS group, an ID related to a UL beam group, an ID related to a DL RS group and an ID related to a DL beam group, or may be both of a resource set ID and a resource ID. In addition, following examples will be described assuming that a beam/panel index is an SRS resource ID.

[Aspect 2-1]

The UE may transmit one P-MPR report together with one beam/panel index per one FR/cell/BWP by an MAC CE.

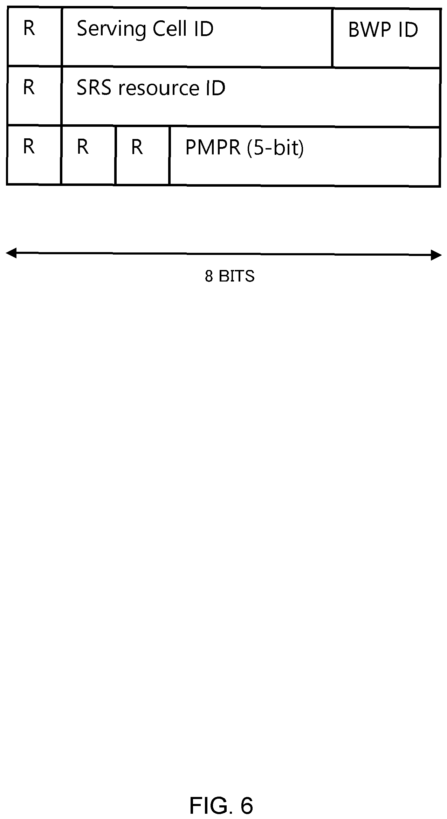

Fig. 6 is a diagram illustrating a first configuration example of an MAC CE according to aspect 2-1. Fig. 6 illustrates an example of the MAC CE that includes a notification of a cell (serving cell ID), a notification of a BWP (BWP ID), a beam/panel index (SRS resource ID) and one P-MPR report.

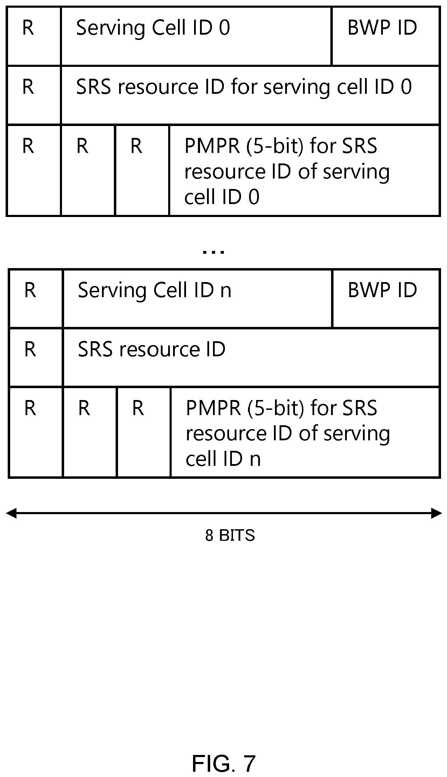

Fig. 7 is a diagram illustrating a second configuration example of the MAC CE according to aspect 2-1. In Fig. 7, a notification of a cell (serving cell ID), a notification of a BWP (BWP ID), a beam/panel index (SRS resource ID) and one P-MPR report are included in one block (8 bits × 3), and a plurality of these blocks (n blocks) are included in the MAC CE. n may be variable according to the number of cells.

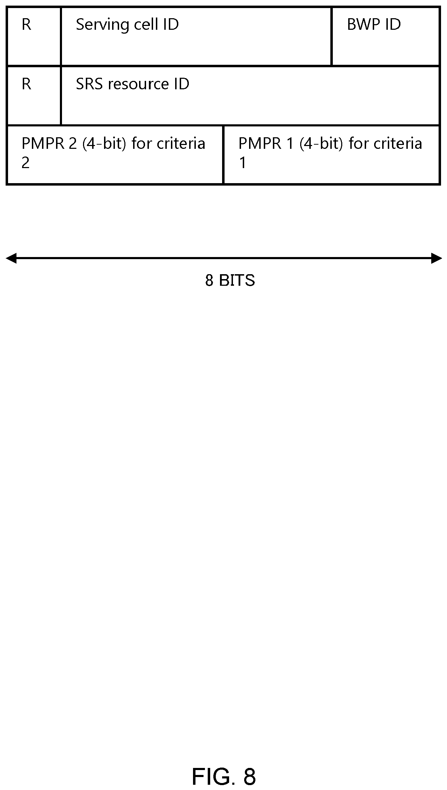

Fig. 8 is a diagram illustrating a third configuration example of the MAC CE according to aspect 2-1. In Fig. 8, a notification of a cell (serving cell ID), a notification of a BWP (BWP ID), a beam/panel index (SRS resource ID) and two P-MPR reports are included in the MAC CE. The two P-MPR reports support respectively different calculation criteria (criteria 1 and 2).

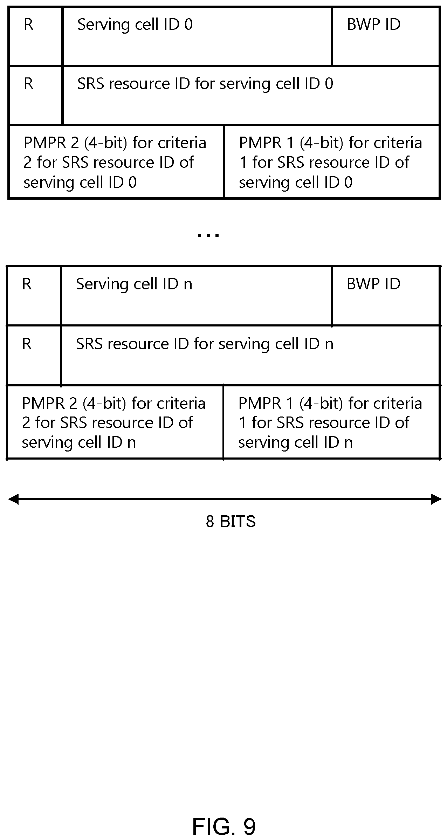

Fig. 9 is a diagram illustrating a fourth configuration example of the MAC CE according to aspect 2-1. In Fig. 9, a notification of a cell (serving cell ID), a notification of a BWP (BWP ID), a beam/panel index (SRS resource ID) and two P-MPR report are included in one block (8 bits × 3), and a plurality of these blocks (n blocks) are included in the MAC CE. n may be variable according to the number of cells.

[Aspect 2-2]

The UE may transmit a plurality of beam/panel indices and a plurality of P-MPR reports per FR/cell/BWP by an MAC CE. The number of a plurality of these beam/panel indices may be determined/configured in advance, or may be variable based on a threshold of a configured P-MPR report.

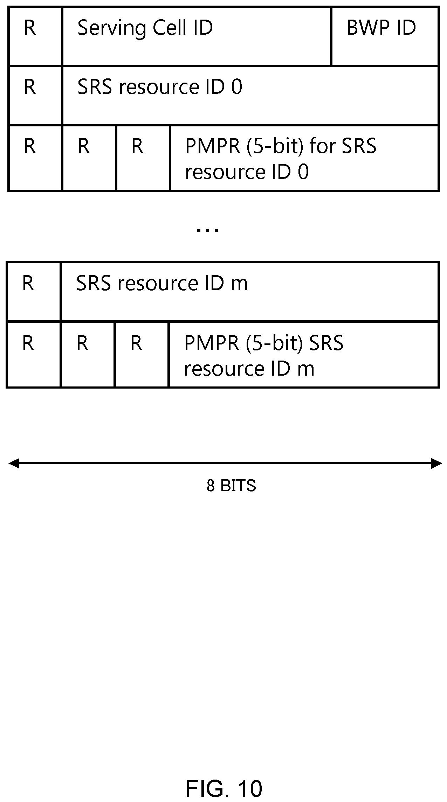

Fig. 10 is a diagram illustrating a first configuration example of an MAC CE according to aspect 2-2. Fig. 10 illustrates an example of the MAC CE that includes a notification of one cell (serving cell ID), a notification of a BWP (BWP ID), a plurality of (m) beam/panel indices (SRS resource IDs) and a plurality of (m) P-MPR reports.

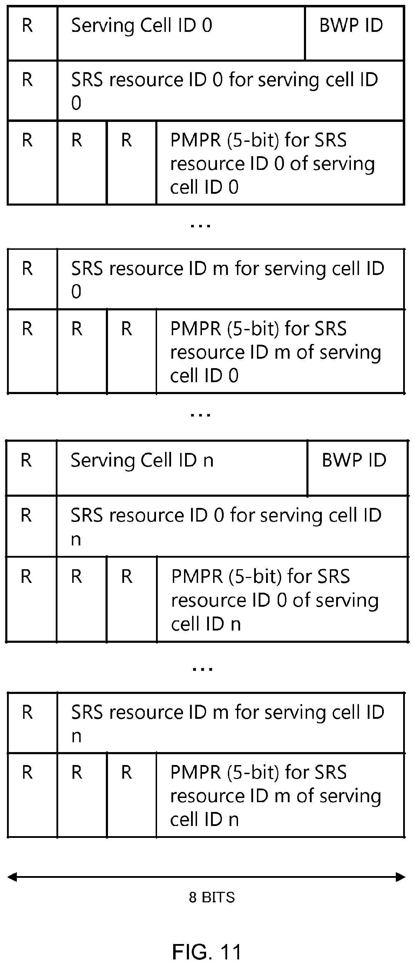

Fig. 11 is a diagram illustrating a second configuration example of the MAC CE according to aspect 2-2. In Fig. 11, a notification of one cell (serving cell ID), a notification of a BWP (BWP ID), a plurality of (m) beam/panel indices (SRS resource IDs) and a plurality of (m) P-MPR reports are included in one block (8 bits × 2 × m+1), and a plurality of these blocks (n blocks) are included in the MAC CE. n may be variable according to the number of cells.

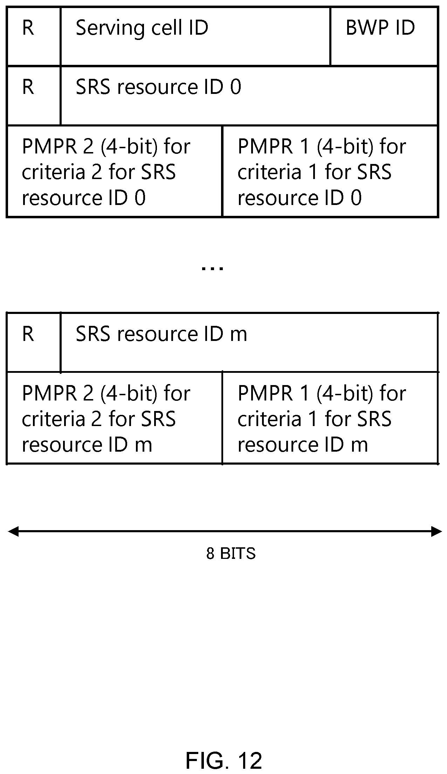

Fig. 12 is a diagram illustrating a third configuration example of the MAC CE according to aspect 2-2. In Fig. 12, a notification of a cell (serving cell ID), a notification of a BWP (BWP ID), a plurality of (m) beam/panel indices (SRS resource IDs) and a plurality of (2 × m) P-MPR reports are included in the MAC CE. One beam/panel index is associated with two P-MPR reports. The two P-MPR reports support respectively different calculation criteria (criteria 1 and 2).

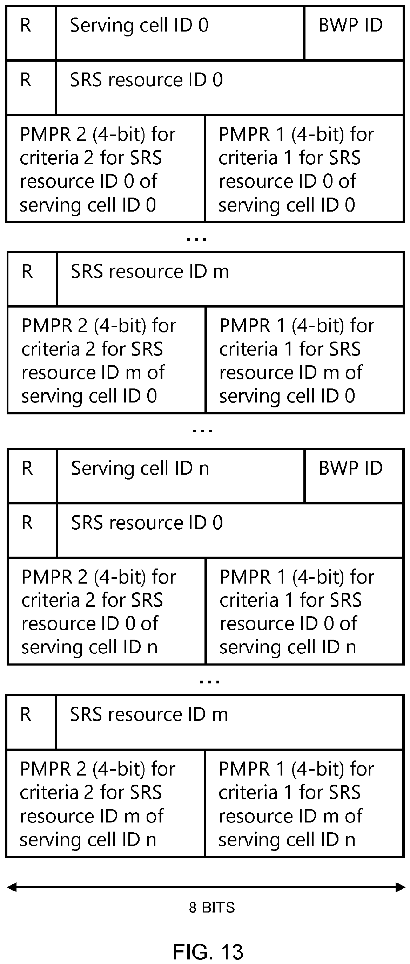

Fig. 13 is a diagram illustrating a fourth configuration example of the MAC CE according to aspect 2-2. In Fig. 13, a notification of a cell (serving cell ID), a notification of a BWP (BWP ID), a plurality of (m) beam/panel indices (SRS resource IDs) and a plurality of (2 × m) P-MPR reports are included in one block, and a plurality of (n) these blocks are included in the MAC CE. One beam/panel index is associated with two P-MPR reports. The two P-MPR reports support respectively different calculation criteria (criteria 1 and 2).

According to the second embodiment, even when a plurality of beams/panels are present, it is possible to transmit an appropriate P-MPR report per beam/panel.

<Third Embodiment>

A UE may transmit information (e.g., an MPE issue beam/panel and whether MPE safe beam/panel is present or absent) related to an MPE issue of each beam/panel by an MAC CE.

In the present disclosure, P-MPR based on a P-MPR value/a plurality of calculation criteria (criteria 1/2/...) may be read as another value (power related value) related to power such as PHR, estimated remaining power, $P_{CMAX, f, c}$ calculated by taking MPE into account and values indicated in the above contents 5/contents 6.

A beam/panel index described in the second embodiment may indicate a beam/panel (MPE issue beam/panel) that includes the MPE issue, and a beam/panel (MPE safe beam/panel) that is MPE safe. The MPE issue beam/panel may be a beam/panel that does not function for MPE. The MPE safe beam/panel may be a beam/panel that is a switching destination from the MPE issue beam/panel, or may be a beam/panel that is used for a subsequent operation.

When the MPE safe beam/panel is not present, information that indicates that the MPE safe beam/panel is not present may be included in the MAC CE.

[Aspect 3-1]

The UE may transmit information that indicates whether an MPE issue of each beam/panel is present or absent by an MAC CE. The information that indicates whether the MPE issue is present or absent may be, for example, information that indicates whether each beam/panel is an MPE safe beam/panel or an MPE issue beam/panel.

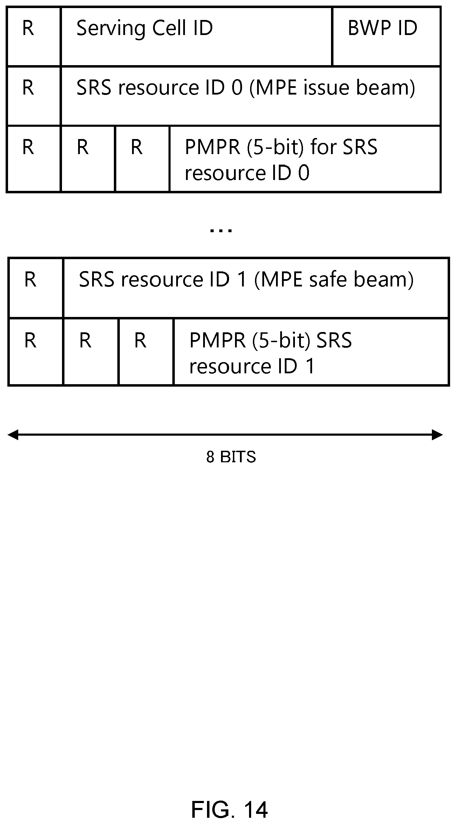

Fig. 14 is a diagram illustrating a first example of an MAC CE including the information that indicates whether the MPE issue is present or absent. In Fig. 14, information that indicates whether each beam/panel is an MPE issue beam or an MPE safe beam is added to a beam/panel index (SRS resource ID). Although Fig. 14 illustrates the example where an MPE issue beam and an MPE safe beam are added to the configuration example in Fig. 10, the example where the MPE issue beam and the MPE safe beam are added may be applied to the configuration examples in Figs. 6 to 9 and 11 to 13.

[Aspect 3-2]

The LTE may transmit an MAC CE that includes a field that indicates whether or not an MPE safe beam is present. In aspect 3-2, the MPE safe beam may be read as an MPE issue beam.

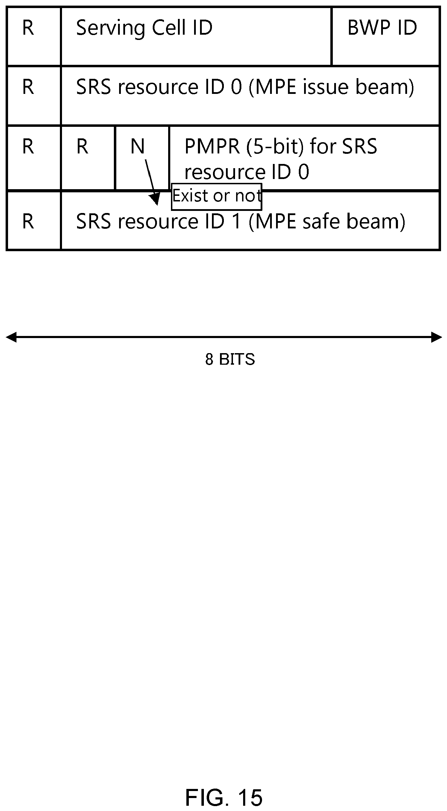

Fig. 15 is a diagram illustrating a configuration example of an MAC CE including a field that indicates whether or not an MPE safe beam is present. An "N" field in Fig. 15 indicates whether or not the MPE safe beam is present. When the MPE safe beam is detected, an MPE safe beam index is notified. When the MPE safe beam is not detected, a last octet (a reserved bit and an MPE safe beam index) in Fig. 15 is not present.

When the MPE safe beam index is notified, a P-MPR value or the above-described other power related value may be included or may not be included in the MAC CE.

When the MPE issue beam index is notified, the P-MPR value or the above-described other power related value may be included or may not be included in the MAC CE.

According to the third embodiment, it is possible to report information (e.g., whether the MPE issue beam/panel and the MPE safe beam/panel are present or absent) together with a P-MPR report.

<Regarding R>

As described above, although "R" included in the MAC CE configuration example in each drawing indicates a reserved bit that does not give a notification of information, it may be possible to give a notification of information by using "R". "R" may indicate, for example, whether information (e.g., P-MPR report) related to MPE in the present disclosure is present or absent.

"R" may be applied to switch beam information/RS information. For example, "R" may be applied to switch between a UL beam/RS and a DL beam/RS or switch an SSB/CSI-RS.

"R" may be applied to switch between a plurality of options (such as the embodiments, the aspects and the MAC CE configuration examples) in the present disclosure. For example, "R" may be applied to switch between the numbers of bits (e.g., 2/4/5 bits) of P-MPR in an MAC CE. When two types of the numbers of bits (e.g., two of 2/4/5 bits) are configured/specified as the numbers of P-MPR, the number of bits may be switched by using one of "R". When three types of the numbers of bits (e.g., 2/4/5 bits) are configured/specified as the numbers of P-MPR, the number of bits may be switched by using two of "R".

At least part of information related to an MPE issue beam may be notified by using "R". Whether information related to the MPE issue beam is present or absent (whether or not MPE issue beam information is loaded in an MAC CE) may be notified by using "R".

(Radio Communication System)

The configuration of the radio communication system according to one embodiment of the present disclosure will be described below. This radio communication system uses one or a combination of the radio communication method according to each of the above embodiments of the present disclosure to perform communication.

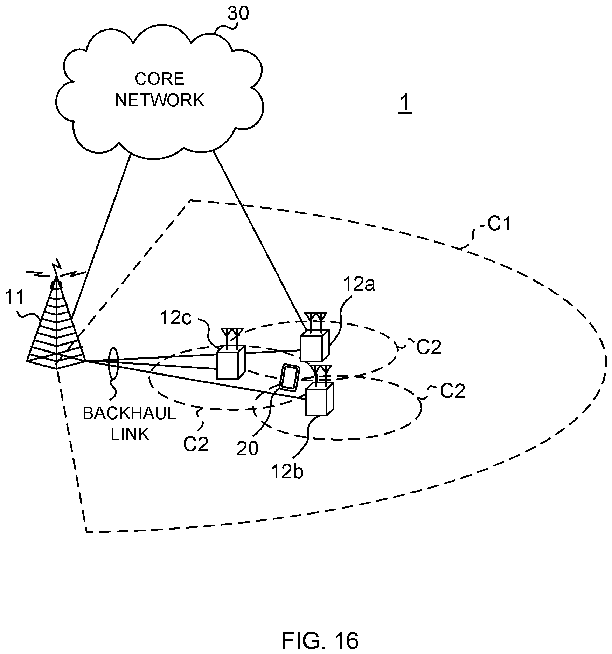

Fig. 16 is a diagram illustrating one example of a schematic configuration of the radio communication system according to the one embodiment. A radio communication system 1 may be a system that realizes communication by using Long Term Evolution (LTE) or the 5th generation mobile communication system New Radio (5G NR) specified by the Third Generation Partnership Project (3GPP).

Furthermore, the radio communication system 1 may support dual connectivity between a plurality of Radio Access Technologies (RATs) (Multi-RAT Dual Connectivity (MR-DC)). MR-DC may include dual connectivity (E-UTRA-NR Dual Connectivity (EN-DC)) of LTE (Evolved Universal Terrestrial Radio Access (E-UTRA)) and NR, and dual connectivity (NR-E-UTRA Dual Connectivity (NE-DC)) of NR and LTE.

According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.

The radio communication system 1 may support dual connectivity between a plurality of base stations in an identical RAT (e.g., dual connectivity (NR-NR Dual Connectivity (NN-DC)) where both of the MN and the SN are base stations (gNBs) according to NR).

The radio communication system 1 may include a base station 11 that forms a macro cell C1 of a relatively wide coverage, and base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 16. The base stations 11 and 12 will be collectively referred to as a base station 10 below when not distinguished.

The user terminal 20 may connect with at least one of a plurality of base stations 10. The user terminal 20 may use at least one of Carrier Aggregation (CA) and Dual Connectivity (DC) that use a plurality of Component Carriers (CCs).

Each CC may be included in at least one of a first frequency range (Frequency Range 1 (FR 1)) and a second frequency range (Frequency Range 2 (FR 2)). The macro cell C1 may be included in the FR 1, and the small cell C2 may be included in the FR 2. For example, the FR 1 may be a frequency range equal to or less than 6 GHz (sub-6 GHz), and the FR 2 may be a frequency range higher than 24 GHz (above-24 GHz). In addition, the frequency ranges and definitions of the FR 1 and the FR 2 are not limited to these, and, for example, the FR 1 may correspond to a frequency range higher than the FR 2.

Furthermore, the user terminal 20 may perform communication by using at least one of Time Division Duplex (TDD) and Frequency Division Duplex (FDD) in each CC.

A plurality of base stations 10 may be connected by way of wired connection (e.g., optical fibers compliant with a Common Public Radio Interface (CPRI) or an X2 interface) or radio connection (e.g., NR communication). When, for example, NR communication is used as a backhaul between the base stations 11 and 12, the base station 11 corresponding to a higher station may be referred to as an Integrated Access Backhaul (IAB) donor, and the base station 12 corresponding to a relay station (relay) may be referred to as an IAB node.

The base station 10 may be connected with a core network 30 via the other base station 10 or directly. The core network 30 may include at least one of, for example, an Evolved Packet Core (EPC), a 5G Core Network (5GCN) and a Next Generation Core (NGC).

The user terminal 20 is a terminal that supports at least one of communication schemes such as LTE, LTE-A and 5G.

The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA) and Single Carrier Frequency Division Multiple Access (SC-FDMA) may be used.

The radio access scheme may be referred to as a waveform. In addition, the radio communication system 1 may use another radio access scheme (e.g., another single carrier transmission scheme or another multicarrier transmission scheme) as the radio access scheme on UL and DL.

The radio communication system 1 may use a downlink shared channel (Physical Downlink Shared Channel (PDSCH)) shared by each user terminal 20, a broadcast channel (Physical Broadcast Channel (PBCH)) and a downlink control channel (Physical Downlink Control Channel (PDCCH)) as downlink channels.

Furthermore, the radio communication system 1 may use an uplink shared channel (Physical Uplink Shared Channel (PUSCH)) shared by each user terminal 20, an uplink control channel (Physical Uplink Control Channel (PUCCH)) and a random access channel (Physical Random Access Channel (PRACH)) as uplink channels.

User data, higher layer control information and a System Information Block (SIB) are conveyed on the PDSCH. The user data and the higher layer control information may be conveyed on the PUSCH. Furthermore, a Master Information Block (MIB) may be conveyed on the PBCH.

Lower layer control information may be conveyed on the PDCCH. The lower layer control information may include, for example, Downlink Control Information (DCI) including scheduling information of at least one of the PDSCH and the PUSCH.

In addition, DCI for scheduling the PDSCH may be referred to as, for example, a DL assignment or DL DCI, and DCI for scheduling the PUSCH may be referred to as, for example, a UL grant or UL DCI. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The LTE may monitor a CORESET associated with a certain search space based on a search space configuration.

One search space may be associated with a PDCCH candidate corresponding to one or a plurality of aggregation levels. One or a plurality of search spaces may be referred to as a search space set. In addition, a "search space", a "search space set", a "search space configuration", a "search space set configuration", a "CORESET" and a "CORESET configuration" in the present disclosure may be interchangeably read.

Uplink Control Information (UCI) including at least one of Channel State Information (CSI), transmission acknowledgement information (that may be referred to as, for example, Hybrid Automatic Repeat reQuest ACKnowledgement (HARQ-ACK) or ACK/NACK) and a Scheduling Request (SR) may be conveyed on the PUCCH. A random access preamble for establishing connection with a cell may be conveyed on the PRACH.

In addition, downlink and uplink in the present disclosure may be expressed without adding "link" thereto. Furthermore, various channels may be expressed without adding "physical" to heads of the various channels.

The radio communication system 1 may convey a Synchronization Signal (SS) and a Downlink Reference Signal (DL-RS). The radio communication system 1 may convey a Cell-specific Reference Signal (CRS), a Channel State Information Reference Signal (CSI-RS), a DeModulation Reference Signal (DMRS), a Positioning Reference Signal (PRS) and a Phase Tracking Reference Signal (PTRS) as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as, for example, an SS/PBCH block or an SS Block (SSB). In addition, the SS and the SSB may be also referred to as reference signals.

Furthermore, the radio communication system 1 may convey a Sounding Reference Signal (SRS) and a De-Modulation Reference Signal (DMRS) as UpLink Reference Signals (UL-RSs). In this regard, the DMRS may be referred to as a user terminal-specific reference signal (UE-specific reference signal).

(Base Station)

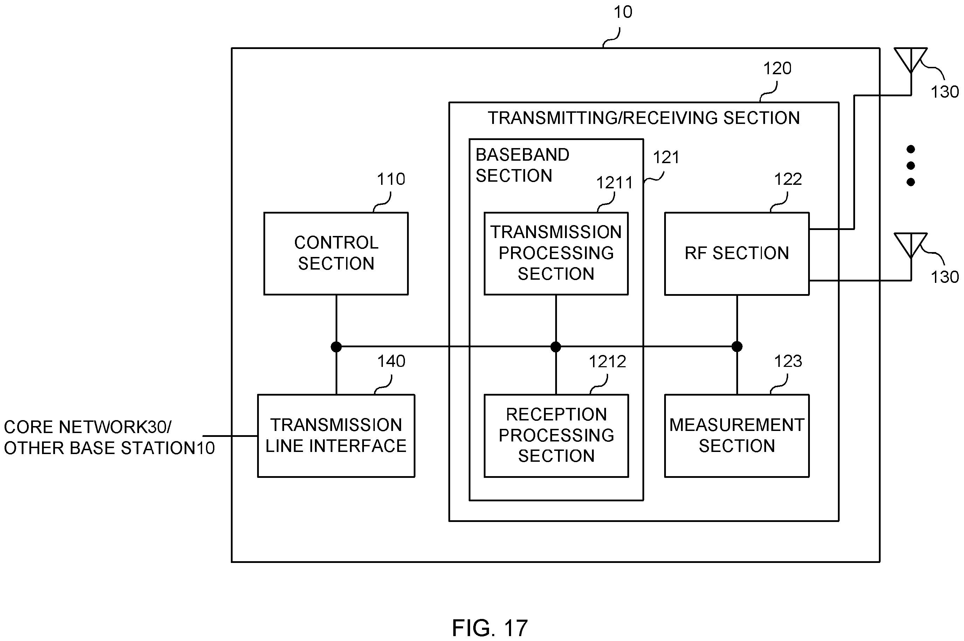

Fig. 17 is a diagram illustrating one example of a configuration of the base station according to the one embodiment. The base station 10 includes a control section 110, a transmitting/receiving section 120, transmission/reception antennas 130 and a transmission line interface 140. In addition, the base station 10 may include one or more of each of the control sections 110, the transmitting/receiving sections 120, the transmission/reception antennas 130 and the transmission line interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller or a control circuit described based on the common knowledge in the technical field according to the present disclosure.

The control section 110 may control signal generation and scheduling (e.g., resource allocation or mapping). The control section 110 may control transmission/reception and measurement that use the transmitting/receiving section 120, the transmission/reception antennas 130 and the transmission line interface 140. The control section 110 may generate data, control information or a sequence to be transmitted as a signal, and forward the signal to the transmitting/receiving section 120. The control section 110 may perform call processing (such as configuration and release) of a communication channel, state management of the base station 10 and radio resource management.

The transmitting/receiving section 120 may include a baseband section 121, a Radio Frequency (RF) section 122 and a measurement section 123. The baseband section 121 may include a transmission processing section 1211 and a reception processing section 1212. The transmitting/receiving section 120 can be composed of a transmitter/receiver, an RF circuit, a baseband circuit, a filter, a phase shifter, a measurement circuit and a transmission/reception circuit described based on the common knowledge in the technical field according to the present disclosure.

The transmitting/receiving section 120 may be composed as an integrated transmitting/receiving section, or may be composed of a transmitting section and a receiving section. The transmitting section may be composed of the transmission processing section 1211 and the RF section 122. The receiving section may be composed of the reception processing section 1212, the RF section 122 and the measurement section 123.

The transmission/reception antenna 130 can be composed of an antenna such as an array antenna described based on the common knowledge in the technical field according to the present disclosure.

The transmitting/receiving section 120 may transmit the above-described downlink channel, synchronization signal and downlink reference signal. The transmitting/receiving section 120 may receive the above-described uplink channel and uplink reference signal.

The transmitting/receiving section 120 may form at least one of a transmission beam and a reception beam by using digital beam forming (e.g., precoding) or analog beam forming (e.g., phase rotation).

The transmitting/receiving section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) on, for example, the data and the control information obtained from the control section 110, and generate a bit sequence to transmit.

The transmitting/receiving section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding and digital-analog conversion on the bit sequence to transmit, and output a baseband signal.

The transmitting/receiving section 120 (RF section 122) may modulate the baseband signal into a radio frequency range, perform filter processing and amplification on the signal, and transmit the signal of the radio frequency range via the transmission/reception antennas 130.

On the other hand, the transmitting/receiving section 120 (RF section 122) may perform amplification and filter processing on the signal of the radio frequency range received by the transmission/reception antennas 130, and demodulate the signal into a baseband signal.

The transmitting/receiving section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing and PDCP layer processing to the obtained baseband signal, and obtain user data.

The transmitting/receiving section 120 (measurement section 123) may perform measurement related to the received signal. For example, the measurement section 123 may perform Radio Resource Management (RRM) measurement or Channel State Information (CSI) measurement based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 123 may output a measurement result to the control section 110.

The transmission line interface 140 may transmit and receive (backhaul signaling) signals to and from apparatuses and the other base stations 10 included in the core network 30, and obtain and convey user data (user plane data) and control plane data for the user terminal 20.

In addition, the transmitting section and the receiving section of the base station 10 according to the present disclosure may be composed of at least one of the transmitting/receiving section 120, the transmission/reception antenna 130 and the transmission line interface 140.

In addition, the transmitting/receiving section 120 may receive a Power-management Maximum Power Reduction (P-MPR) report of each Frequency Range (FR), cell or Bandwidth Part (BWP) by a Medium Access Control-Control Element (MAC CE), and receive a UL signal that is based on the P-MPR.

(User Terminal)

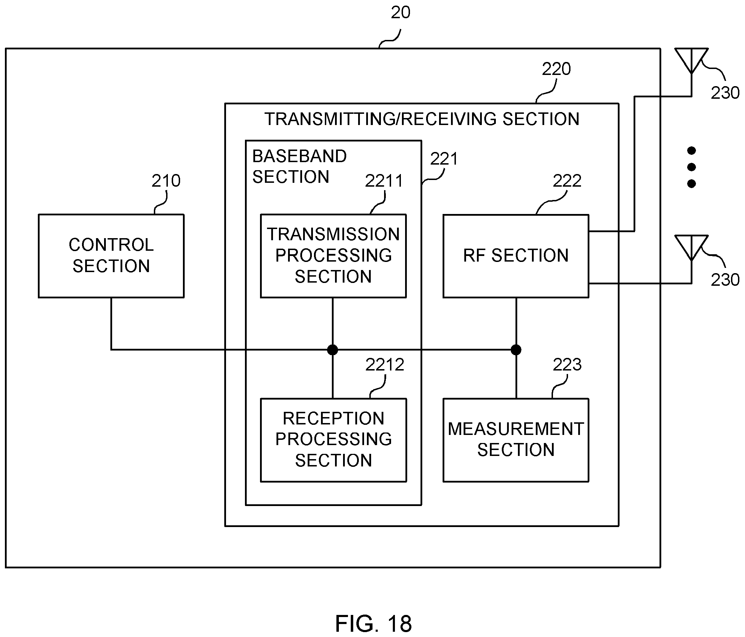

Fig. 18 is a diagram illustrating one example of a configuration of the user terminal according to the one embodiment. The user terminal 20 includes a control section 210, a transmitting/receiving section 220 and transmission/reception antennas 230. In this regard, the user terminal 20 may include one or more of each of the control sections 210, the transmitting/receiving sections 220 and the transmission/reception antennas 230.

In addition, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller or a control circuit described based on the common knowledge in the technical field according to the present disclosure.

The control section 210 may control signal generation and mapping. The control section 210 may control transmission/reception and measurement that use the transmitting/receiving section 220 and the transmission/reception antennas 230. The control section 210 may generate data, control information or a sequence to be transmitted as a signal, and forward the signal to the transmitting/receiving section 220.

The transmitting/receiving section 220 may include a baseband section 221, an RF section 222 and a measurement section 223. The baseband section 221 may include a transmission processing section 2211 and a reception processing section 2212. The transmitting/receiving section 220 can be composed of a transmitter/receiver, an RF circuit, a baseband circuit, a filter, a phase shifter, a measurement circuit and a transmission/reception circuit described based on the common knowledge in the technical field according to the present disclosure.

The transmitting/receiving section 220 may be composed as an integrated transmitting/receiving section, or may be composed of a transmitting section and a receiving section. The transmitting section may be composed of the transmission processing section 2211 and the RF section 222. The receiving section may be composed of the reception processing section 2212, the RF section 222 and the measurement section 223.

The transmission/reception antenna 230 can be composed of an antenna such as an array antenna described based on the common knowledge in the technical field according to the present disclosure.

The transmitting/receiving section 220 may receive the above-described downlink channel, synchronization signal and downlink reference signal. The transmitting/receiving section 220 may transmit the above-described uplink channel and uplink reference signal.

The transmitting/receiving section 220 may form at least one of a transmission beam and a reception beam by using digital beam forming (e.g., precoding) or analog beam forming (e.g., phase rotation).

The transmitting/receiving section 220 (transmission processing section 2211) may perform PDCP layer processing, RLC layer processing (e.g., RLC retransmission control) and MAC layer processing (e.g., HARQ retransmission control) on, for example, the data and the control information obtained from the control section 210, and generate a bit sequence to transmit.

The transmitting/receiving section 220 (transmission processing section 2211) may perform transmission processing such as channel coding (that may include error correction coding), modulation, mapping, filter processing, DFT processing (when needed), IFFT processing, precoding and digital-analog conversion on the bit sequence to transmit, and output a baseband signal.

In this regard, whether or not to apply the DFT processing may be based on a configuration of transform precoding. When transform precoding is enabled for a certain channel (e.g., PUSCH), the transmitting/receiving section 220 (transmission processing section 2211) may perform the DFT processing as the above transmission processing to transmit the certain channel by using a DFT-s-OFDM waveform. When precoding is not enabled, the transmitting/receiving section 220 (transmission processing section 2211) may not perform the DFT processing as the above transmission processing.

The transmitting/receiving section 220 (RF section 222) may modulate the baseband signal into a radio frequency range, perform filter processing and amplification on the signal, and transmit the signal of the radio frequency range via the transmission/reception antennas 230.

On the other hand, the transmitting/receiving section 220 (RF section 222) may perform amplification and filter processing on the signal of the radio frequency range received by the transmission/reception antennas 230, and demodulate the signal into a baseband signal.

The transmitting/receiving section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing and PDCP layer processing to the obtained baseband signal, and obtain user data.

The transmitting/receiving section 220 (measurement section 223) may perform measurement related to the received signal. For example, the measurement section 223 may perform, for example, RRM measurement or CSI measurement based on the received signal. The measurement section 223 may measure, for example, received power (e.g., RSRP), received quality (e.g., RSRQ, an SINR or an SNR), a signal strength (e.g., RSSI) or channel information (e.g., CSI). The measurement section 223 may output a measurement result to the control section 210.

In addition, the transmitting section and the receiving section of the user terminal 20 according to the present disclosure may be composed of at least one of the transmitting/receiving section 220 and the transmission/reception antenna 230.

In addition, the transmitting/receiving section 220 may transmit the Power-management Maximum Power Reduction (P-MPR) report of each Frequency Range (FR), cell or Bandwidth (BWP) by the Medium Access Control-Control Element (MAC CE).

The transmitting/receiving section 220 may transmit the P-MPR report of each beam or panel and each FR, cell or BWP by the MAC CE. The transmitting/receiving section 220 may transmit information that indicates whether an MPE issue of a beam or a panel is present or absent by the MAC CE. The transmitting/receiving section 220 may transmit the MAC CE that includes a field that indicates whether or not an MPE safe beam is present.

The control section 210 may control transmission of an Uplink (UL) signal based on the P-MPR.

(Hardware Configuration)

In addition, the block diagrams used to describe the above embodiments illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection or radio connection) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as, for example, a transmitting unit or a transmitter. As described above, the method for realizing each function block is not limited in particular.

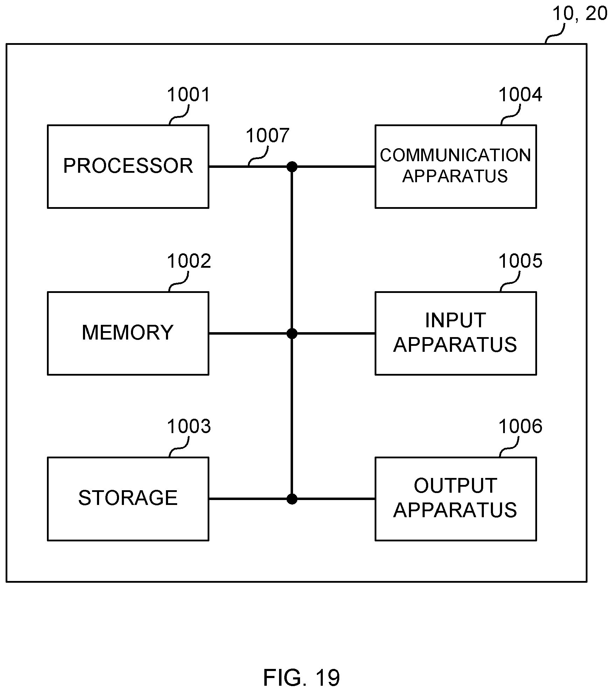

For example, the base station and the user terminal according to the one embodiment of the present disclosure may function as computers that perform processing of the radio communication method according to the present disclosure. Fig. 19 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, words such as an apparatus, a circuit, a device, a section and a unit in the present disclosure can be interchangeably read. The hardware configurations of the base station 10 and the user terminal 20 may be configured to include one or a plurality of apparatuses illustrated in Fig. 19 or may be configured without including part of the apparatuses.

For example, Fig. 19 illustrates the only one processor 1001. However, there may be a plurality of processors. Furthermore, processing may be executed by 1 processor or processing may be executed by 2 or more processors simultaneously or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, at least part of the above-described control section 110 (210) and transmitting/receiving section 120 (220) may be realized by the processor 1001.

Furthermore, the processor 1001 reads programs (program codes), software modules or data from at least one of the storage 1003 and the communication apparatus 1004 out to the memory 1002, and executes various types of processing according to these programs, software modules or data. As the programs, programs that cause the computer to execute at least part of the operations described in the above-described embodiments are used. For example, the control section 110 (210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as, for example, a register, a cache or a main memory (main storage apparatus). The memory 1002 can store programs (program codes) and software modules that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmitting/receiving section 120 (220) and transmission/reception antennas 130 (230) may be realized by the communication apparatus 1004. The transmitting/receiving section 120 (220) may be physically or logically separately implemented as a transmitting section 120a (220a) and a receiving section 120b (220b).

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these hardware components.

(Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS, or may be referred to as a pilot or a pilot signal depending on standards to be applied. Furthermore, a Component Carrier (CC) may be referred to as, for example, a cell, a frequency carrier and a carrier frequency.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as, for example, a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or code word, or may be a processing unit of scheduling or link adaptation. In addition, when the TTI is given, a time period (e.g., the number of symbols) in which a transport block, a code block or a code word is actually mapped may be shorter than the TTI.

In addition, in a case where 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as, for example, a general TTI (TTIs according to 3GPP Rel. 8 to 12), a normal TTI, a long TTI, a general subframe, a normal subframe, a long subframe or a slot. A TTI shorter than the general TTI may be referred to as, for example, a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as, for example, a Physical Resource Block (Physical RB (PRB)), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as, for example, a partial bandwidth) may mean a subset of contiguous common Resource Blocks (common RBs) for a certain numerology in a certain carrier. In this regard, the common RB may be specified by an RB index that is based on a common reference point of the certain carrier. A PRB may be defined based on a certain BWP, and may be numbered in the certain BWP.

The BWP may include a LTL BWP (a BWP for LTL) and a DL BWP (a BWP for DL). One or a plurality of BWPs in 1 carrier may be configured to the UE.

At least one of the configured BWPs may be active, and the LTE may not assume to transmit and receive given signals/channels outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (such as the PUCCH and the PDCCH) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspects/embodiments described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be performed implicitly (by, for example, not performing notification of the given information or by performing notification of another information).

Judgement may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are

EP 4 135 423 A1

included in a definition of the transmission media.

The terms "system" and "network" used in the present disclosure can be interchangeably used. The "network" may mean an apparatus (e.g., base station) included in the network.

In the present disclosure, terms such as "precoding", a "precoder", a "weight (precoding weight)", "Quasi-Co-Location (QCL)", a "Transmission Configuration Indication state (TCI state)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element" and a "panel" can be interchangeably used.

In the present disclosure, terms such as a "Base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (Remote Radio Head (RRH))). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (User Equipment (UE))" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as, for example, a transmission apparatus, a reception apparatus or a radio communication apparatus. In addition, at least one of the base station and the mobile station may be, for example, a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), the 6th generation mobile communication system (6G), the xth generation mobile communication system (xG (x represents, for example, an integer or a decimal)), Future Radio Access (FRA), the New-Radio Access Technology (RAT), New Radio (NR), New radio access (NX), Future generation radio access (FX), the Global System for Mobile communications (GSM (registered trademark)), CDMA2000, Ultra Mobile Broadband (UNM), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate

18

radio communication methods, or next-generation systems that are enhanced based on these systems. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), and ascertaining.

Furthermore, "deciding (determining)" may be considered to "decide (determine)" receiving (e.g., receiving information), transmitting (e.g., transmitting information), input, output and accessing (e.g., accessing data in a memory).

Furthermore, "deciding (determining)" may be considered to "decide (determine)" resolving, selecting, choosing, establishing and comparing. That is, "deciding (determining)" may be considered to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

In a case where the words "include" and "including" and modifications of these words are used in the present disclosure, these words intend to be comprehensive similar to the word "comprising". Furthermore, the word "or" used in the present disclosure intends to not be an exclusive OR.

In a case where, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiments described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

**Claims**

1. A terminal comprising:

   a transmitting section that transmits a report of Power-management Maximum Power Reduction (P-MPR) of each Frequency Range (FR), cell or Bandwidth Part (BWP) by a Medium Access Control-Control Element (MAC CE); and
   a control section that controls transmission of an Uplink (UL) signal based on the P-MPR.

2. The terminal according to claim 1, wherein the transmitting section transmits the report of the P-MPR of each beam or panel and each FR, cell or BWP by the MAC CE.

3. The terminal according to claim 1 or 2, wherein the transmitting section transmits information that indicates whether a Maximum Permitted Exposure (MPE) issue of a beam or a panel is present or absent by the MAC CE.

4. The terminal according to any one of claims 1 to 3, wherein the transmitting section transmits the MAC CE that includes a field that indicates whether or not an MPE safe beam is present.

5. A radio communication method of a terminal comprising:

transmitting a report of Power-management Maximum Power Reduction (P-MPR) of each Frequency Range (FR), cell or Bandwidth Part (BWP) by a Medium Access Control-Control Element (MAC CE); and controlling transmission of a UL signal based on the P-MPR.

6. A base station comprising:
a receiving section that receives a report of Power-management Maximum Power Reduction (P-MPR) of each Frequency Range (FR), cell or Bandwidth Part (BWP) by a Medium Access Control-Control Element (MAC CE), and receives a UL signal that is based on the P-MPR.

| Value | P-MPR |
|-------|-------|
| 1 | 1 dB |
| 2 | 2 dB |
| 3 | 3 dB |
| 4 | 4 dB |
| 5 | 5 dB |
| 6 | 6 dB |
| 7 | 7 dB |
| 8 | 8 dB |
| 9 | 9 dB |
| 10 | 10 dB |
| 11 | 11-13 dB |
| 12 | 14-16 dB |
| 13 | 17-20 dB |
| 14 | 21-24 dB |
| 15 | 25 - 29 dB |
| 16 | 30 dB and above |

FIG. 1

FIG. 2A

| R | R | R | PMPR (5-bit, can be also other bit number) |
|---|---|---|---|

8 BITS

FIG. 2B

| R | PMPR (2-bit) | Serving Cell ID |
|---|---|---|

8 BITS

FIG. 2C

| R | Serving Cell ID | | | BWP ID |
|---|---|---|---|---|
| R | R | R | PMPR (5-bit) | |

8 BITS

| R | Serving Cell ID 0 (or PCell) | | | BWP ID |
|---|---|---|---|---|
| R | R | R | PMPR (5-bit) for serving cell ID 0 | |
| R | Serving Cell ID 1 | | | BWP ID |
| R | R | R | PMPR (5-bit) for serving cell ID 1 | |

...

| R | Serving Cell ID n | | | BWP ID |
|---|---|---|---|---|
| R | R | R | PMPR (5-bit) for serving cell ID n | |

← 8 BITS →

FIG. 3

| R | Serving cell ID | | BWP ID |
|---|---|---|---|
| PMPR 2 (4-bit) for criteria 2 | | PMPR 1 (4-bit) for criteria 1 | |

← 8 BITS →

FIG. 4

| R | Serving cell ID 0 | BWP ID |
|---|---|---|
| PMPR 2 (4-bit) for criteria 2 for serving cell ID 0 | PMPR 1 (4-bit) for criteria 1 for serving cell ID 0 | |
| R | Serving cell ID 1 | BWP ID |
| PMPR 2 (4-bit) for criteria 2 for serving cell ID 1 | PMPR 1 (4-bit) for criteria 1 for serving cell ID 1 | |
| R | Serving cell ID n | BWP ID |
| PMPR 2 (4-bit) for criteria 2 for serving cell ID n | PMPR 1 (4-bit) for criteria 1 for serving cell ID n | |

← 8 BITS →

FIG. 5

| R | Serving Cell ID | | BWP ID |
|---|---|---|---|
| R | SRS resource ID | | |
| R | R | R | PMPR (5-bit) |

←———————————————————→

8 BITS

FIG. 6

| R | Serving Cell ID 0 | | BWP ID |
|---|---|---|---|
| R | SRS resource ID for serving cell ID 0 | | |
| R | R | R | PMPR (5-bit) for SRS resource ID of serving cell ID 0 |

...

| R | Serving Cell ID n | | BWP ID |
|---|---|---|---|
| R | SRS resource ID | | |
| R | R | R | PMPR (5-bit) for SRS resource ID of serving cell ID n |

← 8 BITS →

FIG. 7

| R | Serving cell ID | BWP ID |
|---|-----------------|--------|
| R | SRS resource ID | |
| PMPR 2 (4-bit) for criteria 2 | PMPR 1 (4-bit) for criteria 1 | |

← 8 BITS →

# FIG. 8

| R | Serving cell ID 0 | | BWP ID |
|---|---|---|---|
| R | SRS resource ID for serving cell ID 0 | | |
| PMPR 2 (4-bit) for criteria 2 for SRS resource ID of serving cell ID 0 | | PMPR 1 (4-bit) for criteria 1 for SRS resource ID of serving cell ID 0 | |

. . .

| R | Serving cell ID n | | BWP ID |
|---|---|---|---|
| R | SRS resource ID for serving cell ID n | | |
| PMPR 2 (4-bit) for criteria 2 for SRS resource ID of serving cell ID n | | PMPR 1 (4-bit) for criteria 1 for SRS resource ID of serving cell ID n | |

⟵————————————————⟶

8 BITS

FIG. 9

| R | Serving Cell ID | | | BWP ID |
|---|---|---|---|---|
| R | SRS resource ID 0 | | | |
| R | R | R | PMPR (5-bit) for SRS resource ID 0 | |

...

| R | SRS resource ID m | | |
|---|---|---|---|
| R | R | R | PMPR (5-bit) SRS resource ID m |

← 8 BITS →

FIG. 10

| R | Serving Cell ID 0 | | | BWP ID |
|---|---|---|---|---|
| R | SRS resource ID 0 for serving cell ID 0 | | | |
| R | R | R | PMPR (5-bit) for SRS resource ID 0 of serving cell ID 0 | |

...

| R | SRS resource ID m for serving cell ID 0 | | |
|---|---|---|---|
| R | R | R | PMPR (5-bit) for SRS resource ID m of serving cell ID 0 |

...

| R | Serving Cell ID n | | | BWP ID |
|---|---|---|---|---|
| R | SRS resource ID 0 for serving cell ID n | | | |
| R | R | R | PMPR (5-bit) for SRS resource ID 0 of serving cell ID n | |

...

| R | SRS resource ID m for serving cell ID n | | |
|---|---|---|---|
| R | R | R | PMPR (5-bit) for SRS resource ID m of serving cell ID n |

8 BITS

FIG. 11

| R | Serving cell ID | BWP ID |
|---|---|---|
| R | SRS resource ID 0 | |
| PMPR 2 (4-bit) for criteria 2 for SRS resource ID 0 | PMPR 1 (4-bit) for criteria 1 for SRS resource ID 0 | |

...

| R | SRS resource ID m | |
|---|---|---|
| PMPR 2 (4-bit) for criteria 2 for SRS resource ID m | PMPR 1 (4-bit) for criteria 1 for SRS resource ID m | |

← 8 BITS →

FIG. 12

| | | |
|---|---|---|
| R | Serving cell ID 0 | BWP ID |
| R | SRS resource ID 0 | |
| PMPR 2 (4-bit) for criteria 2 for SRS resource ID 0 of serving cell ID 0 | PMPR 1 (4-bit) for criteria 1 for SRS resource ID 0 of serving cell ID 0 | |

...

| | |
|---|---|
| R | SRS resource ID m |
| PMPR 2 (4-bit) for criteria 2 for SRS resource ID m of serving cell ID 0 | PMPR 1 (4-bit) for criteria 1 for SRS resource ID m of serving cell ID 0 |

...

| | | |
|---|---|---|
| R | Serving cell ID n | BWP ID |
| R | SRS resource ID 0 | |
| PMPR 2 (4-bit) for criteria 2 for SRS resource ID 0 of serving cell ID n | PMPR 1 (4-bit) for criteria 1 for SRS resource ID 0 of serving cell ID n | |

...

| | |
|---|---|
| R | SRS resource ID m |
| PMPR 2 (4-bit) for criteria 2 for SRS resource ID m of serving cell ID n | PMPR 1 (4-bit) for criteria 1 for SRS resource ID m of serving cell ID n |

← 8 BITS →

FIG. 13

| R | Serving Cell ID | | | BWP ID |
|---|---|---|---|---|
| R | SRS resource ID 0 (MPE issue beam) | | | |
| R | R | R | PMPR (5-bit) for SRS resource ID 0 | |

...

| R | SRS resource ID 1 (MPE safe beam) | | |
|---|---|---|---|
| R | R | R | PMPR (5-bit) SRS resource ID 1 |

← 8 BITS →

FIG. 14

| R | Serving Cell ID | | | BWP ID |
|---|---|---|---|---|
| R | SRS resource ID 0 (MPE issue beam) | | | |
| R | R | N | PMPR (5-bit) for SRS resource ID 0 | |
| R | SRS resource ID 1 (MPE safe beam) | | | |

Exist or not

← 8 BITS →

FIG. 15

FIG. 16

FIG. 17

EP 4 135 423 A1

FIG. 18

EP 4 135 423 A1

10, 20

| | | |
|---|---|---|
| PROCESSOR 1001 | 1007 | COMMUNICATION APPARATUS 1004 |
| MEMORY 1002 | | INPUT APPARATUS 1005 |
| STORAGE 1003 | | OUTPUT APPARATUS 1006 |

FIG. 19

## INTERNATIONAL SEARCH REPORT

| International application No. |
|---|
| PCT/JP2020/016210 |

**A. CLASSIFICATION OF SUBJECT MATTER**
Int. Cl. H04W52/30(2009.01)i
FI: H04W52/30

According to International Patent Classification (IPC) or to both national classification and IPC

**B. FIELDS SEARCHED**

Minimum documentation searched (classification system followed by classification symbols)
Int. Cl. H04B7/24-7/26, H04W4/00-99/00

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Nokia, Nokia Shanghai Bell. Introduction of FR2 MPE P-MPR reporting[online], 3GPP TSG RAN WG2 #109bis-e R2-2002686, 09 April 2020, pp. 1-3 | 1, 5-6 |
| Y | | 2-4 |
| Y | Nokia, Nokia Shanghai Bell. Enhancements on Multi-beam Operation [online], 3GPP TSG RAN WG1 #98 R1-1909210, 30 August 2019, pp. 6, 7 | 2-4 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26.10.2020 | 02.11.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010